# EUROPEAN PATENT SPECIFICATION

(11) **EP 2 195 375 B1**
(45) Date of publication and mention of the grant of the patent: **16.03.2011**
(21) Application number: 07827742.3
(22) Date of filing: 02.10.2007
(51) Int. Cl.: C08K 3/22, C08G 63/197, C08J 5/18

(54) **POLYMERIC FILM AND OPTICAL DEVICE COMPRISING SAID FILM**
POLYMERFILM UND OPTISCHE VORRICHTUNG DAMIT
FILM POLYMÈRE ET DISPOSITIF OPTIQUE INTÉGRANT LEDIT FILM

(43) Date of publication of application: 16.06.2010
(73) Proprietor: Ferrania Technologies S.p.A., 17014 Ferrania/Cairo Montenotte (IT); Samsung Corning Precision Materials Co., Ltd., Gumi-si Gyeongsangbuk-do 730-360 (KR)
(72) Inventor: FERRARO, Gian Paolo, I-17043 Carcare (SV)) (IT); MARINELLI, Ena, I-17028 Bergeggi (SV) (IT); BALESTRA, Corrado, I-17017 Millesimo (SV) (IT)
(74) Representative: Bottero, Claudio
(86) International application number: PCT/IT2007/000691
(87) International publication number: WO 2009/044415

(56) References cited:
- EP-A- 1 548 066
- EP-A- 1 580 223
- WO-A-03/089508
- JP-A- 2006 249 276
- US-A1- 2004 192 848

## Description

The present invention refers to a polymeric film having excellent optical, thermal and mechanical properties and to an optical device comprising said film.

In particular, the polymeric film comprises a transparent polymer.

Nowadays, high performance polymeric films are required from the market place as thin flexible substrates for electronic and optical applications such as thin-film solar cells, liquid crystal displays (LCD), organic light-emitting diode displays (OLED), electronic paper (e-paper), and other electronic devices, flexible printed circuit boards and high temperature capacitors. These substrates generally have properties typically required in this technological field such as for example flexibility, high thermal resistance plus a number of additional features typical of rigid substrates (such as glass), such as transparency, low coefficient of thermal expansion (CTE), low irreversible shrinkage, low hygroscopic expansion, low surface roughness, low permeation of oxygen and water, high resistance against chemicals and solvents.

### Prior Art

Composites containing nanometric or micrometric fillers are well known in the Art, additionally many polymeric films are commercially available.

US Patent No. 7,132,154 describes a transparent composite comprising an epoxy resin and glass filler particles wherein the term resin means a mixture of two epoxy resins having, after curing, refractive indexes respectively lower and higher than the refractive index of the glass filler. In order to use this transparent composite in the field of optical devices, the difference in refractive index between the resins and the glass filler must be minimized. It is known in the Art that the refractive index of glass fillers shows a lot-to-lot variations (see for example US Patent No. 6,979,704). Therefore the balance between the two resins should be carefully evaluated for any single glass filler lot. So, the process described in US 7,132,154 is very expensive and difficult to scale-up.

US Patent No. 6,979,704 describes a material composed of a resin and a plurality of glass micro- and nano-particles having a defined refractive index and a defined coefficient of thermal expansion. To reach low values of CTE, it is required to incorporate a large quantity (around 30% in volume) of micro-particles with respect to the resin. This leads to a higher production costs of the described material and to an increase of brittleness because of the introduction of filler particles having a large diameter.

US Patent No. 6,767,951 describes nano-composite materials derived from polyester terephthalate, the inorganic filler being clay. This material is not transparent therefore it cannot be used in optical applications.

US Patent No. 5,667,934 describes a transparent composite material featuring a CTE between 28 and 40 ppm/°C and a heat resistance of 360°C. In this patent a composite material constituted by an epoxy resin and a silica based filler, present in amounts from 50% to 70% w/w with respect to the epoxy resin, and characterized by an average particles size of about 3.5 microns is described. This composite allows to obtain a material transparent to ultraviolet light, but inadequately transparent in the visible range (400-700 nm).

United States Patent Application No. US 2005/0163968 describes a method useful to produce a thin polymeric film having low CTE, reduced shrinkage and a good resistance to chemical attack. Such polymeric film is obtained by mixing a polyimide based plastic material with micro-fillers having an average diameter lower than 20 microns. Nevertheless, as evidenced by patent authors, due to the presence of such micro-fillers, the film shows a texture on the upper surface requiring additional treatments to eliminate such a defect. Moreover the composite material described in this patent shows a strong amber coloration due to the presence of polyimide.

European Patent Application EP 1,580,223 describes the use of alumina hydrate, in a boehmite form, having an average particles size from 2 to 100 nm, to improve in particular the elastic module of a material. Nevertheless, films obtained with such particles are not transparent therefore they cannot be employed in the field of high quality optical devices.

Polymeric materials described in the Art, filled with micro- or nano-particles, generally exhibit the advantage of a low CTE and improved physical and mechanical characteristics.

However, the Applicant of the present invention has noticed that such polymeric materials show the disadvantages previously described, therefore they cannot be used for example in backlit liquid crystal display applications, which constitute the dominant technology in the electronic displays market.

Therefore it is still necessary to obtain polymeric films with improved characteristics.

Specifically, the Applicant of the present invention has faced the problem of supplying a polymeric film having good electrical, mechanical and thermal properties in combination with optical properties, such as high transparency, and low coefficient of thermal expansion (CTE).

The Applicant has now found that this problem can be solved by a polymeric film, as defined in the attached Claim 1.

In a first aspect of the invention, it has been found that a polymeric film comprising a) a transparent polymer and b) an inorganic filler based on aluminium hydroxide can show high flexibility, low coefficient of thermal expansion, still retaining a high transparency and low tendency to brittleness. Therefore, polymeric films of the present invention can be employed in particular as substrates for high quality optical devices where there is a need for those requirements, such as for example in thin-film solar cells, liquid crystal displays (LCD), organic light-emitting diode displays (OLED), electronic paper (e-paper), and similar.

Moreover, the polymeric films of the present invention are particularly advantageous for reducing the manufacturing cost of displays and other electronic devices, due to their compatibility with continuous processes, also defined roll-to-roll, and with conventional printing techniques allowing operations such as photolithography using economically advantageous methods compatible with flexible substrates.

For the aim of the present description and the claims which follow, the term transparent polymer means a polymer having a light transmission at the wavelength of 550 nm not lower than 80%, measured by a Lambda 5 Spectrometer.

Preferably, the transparent polymer is, for example, polyethylene terephthalate (PET), polyethylene naphthalate (PEN), polycarbonate (PC), cyclic olefin co-polymer (COC), polyethersulphone (PES) and fluorene polyester (FPE), or derivatives and/or mixture thereof.

Preferably, the transparent polymer is a polyester represented by the general Formula I: 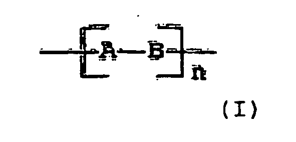 where A represents one or more different derivatives of 9,9'-bis(4-hydroxyphenyl)fluorene having general formula II: 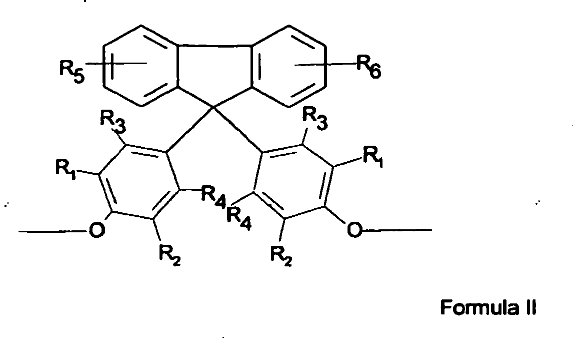 wherein R₁, R₂, R₃, R₄, R₅ and R₆ independently represents a hydrogen atom, a halogen atom, an alkyl group, an aryl group, an aralkyl group, an alkoxy group, and an acyl group;

B represents one ore more dicarboxy groups having Formula III: 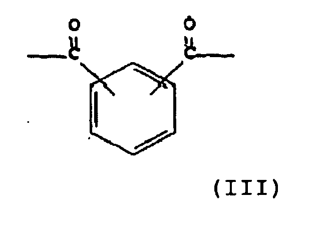 and n is the number of repeating units which build up the polymer, n being an integer higher than 20.

Preferably, R₁, R₂, R₃, R₄, R₅ and R₆ independently represents a hydrogen atom, a halogen atom, more preferably chloride and bromide, and an alkyl group containing from 1 to about 10 carbon atoms, more preferably from 1 to 5 carbon atoms.

More preferably, the transparent polymer comprises one or more polyesters represented by the following Formula IV, wherein n is an integer higher than 20.

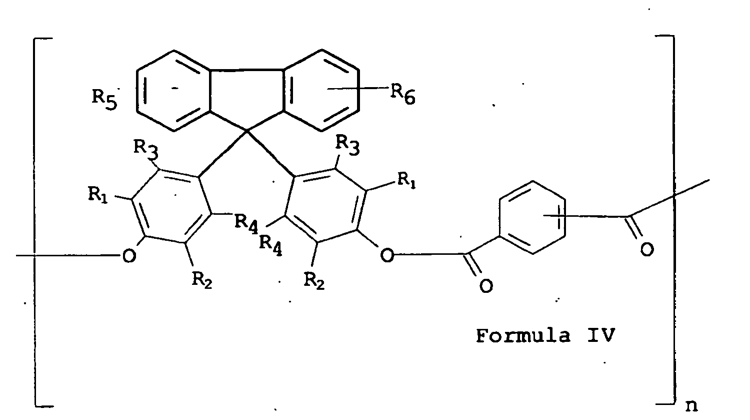

More preferably, the transparent polymer comprises a polyester obtained from at least two different polymerisable units represented by a 9,9'-bis(4-hydroxyphenyl)fluorene derivative of Formula II and by a mixture of isophthalic acid and terephthalic acid.

Still more preferably, the mixture of isophthalic acid and terephthalic acid comprises from 20% to 80% in weight of isophthalic acid and from 80% to 20% in weight of terephthalic acid.

Most preferably, the mixture of isophthalic acid and terephthalic acid comprises from 30% to 70% in weight of isophthalic acid and from 70% to 30% of terephthalic acid.

Manufacturing methods for polyesters of general Formula I are known, as for example the method described in European Patent Application EP 396,418, wherein the interfacial polycondensation technique is used to polymerise terephthalic acid and isophthalic acid units with a 9,9'-bis(4-hydroxyphenyl)fluorene derivative.

Preferably, the inorganic filler based on aluminium hydroxide, used in the present invention, is an inorganic filler represented by the formula Al₂O₃.xH₂O, wherein x is in the range of from 1.0 to 3.0; specifically, the inorganic filler can be, for example, gibbsite, bayerite, nordstrandite, boehmite, diaspore or pseudo-boehmite.

Preferably, said inorganic filler is boehmite or pseudo-boehmite (where x is from 1.0 to 2.0), superficially modified or not-modified. More preferably said inorganic filler is superficially modified boehmite or pseudo-boehmite.

The inorganic filler based on aluminium hydroxide used in the present invention, as described for example in European Patent Application EP 636,489, can be produced by means of any conventional method, such as the hydrolysis of aluminium alkoxide or sodium aluminate. Rocek, et al. [Collect Czech. Chem. Commun., Vol. 56, 1253-1262 (1991)] have reported that the aluminium hydroxide porosity is affected by the deposition temperature, by the pH of the solution, by the ageing time and by the surfactants used.

The shape of the filler based on aluminium hydroxide used in the present invention is preferably in the form of a flat plate (as described in the literature by Rocek J., et al., Applied Catalysis, Vol. 74, 29-36 (1991)), thanks to its better dispersability and because the filler particles, in form of flat plates, become preferentially oriented during the formation of the polymeric film material comprising that filler.

The average particles diameter of said filler based on aluminium hydroxide is preferably in the range from 10 to 200 nm, more preferably from 20 to 150 nm.

The specific surface area of said filler based on aluminium hydroxide is preferably within a range of from 70 to 300 m²/g, preferably in the range from 100 to 250 m²/g, said specific surface area being calculated according to the BET (Brunauer-Emmett-Teller) method described in Journal of American Chemical Society, Vol. 60, page 309 (1938).

The polymeric film of the present invention preferably comprises from 0.5% to 80% in weight of inorganic filler based on aluminium hydroxide and from 99.5% to 20% of transparent polymer, more preferably from 1% to 50% in weight of inorganic filler based on aluminium hydroxide and from 99% to 50% of transparent polymer.

Preferably, the thickness of the polymeric film used in the present invention is in the range from 10 to 1000 µm, more preferably from 20 to 400µm .

Said filler based on aluminium hydroxide can be incorporated in the polymeric film of the present invention by means of conventional techniques.

For example, the polymeric film used in the present invention can be prepared by firstly dispersing said filler based on aluminium hydroxide in the casting solvent, eventually with the aid of a dispersing agent, obtaining a filler suspension and, subsequently, by dissolving said transparent polymer in said so obtained filler suspension.

Alternatively, the filler based on aluminium hydroxide is mixed with the polymer and then directly added to the casting solvent obtaining a liquid mixture useful for casting.

Moreover, the filler based on aluminium hydroxide can be superficially modified before being dispersed in the casting solvent or before being mixed with the transparent polymer and then added to the casting solvent.

Finally, the polymeric film can be produced by means of polymerisation in presence of the superficially modified or not modified filler.

Specific example of casting solvents include alcohols, such as methanol, ethanol and iso-propanol; ketones, such as acetone, metyletylketone, cyclohexanone and diacetone alcohol; amides, such as N,N-dimethylformamide and N,N-dimethylacetamide; sulfoxides, such as dimethylsulfoxide; ethers, such as tetrahydrofuran, dioxane and ethylenglycole monomethylether; esters, such as methylacetate, ethylacetate and butylacetate; halogenated aliphatic hydrocarbon, such as chloroform, methylene chloride, dichloroethane, trichloroethylene and tetrachloroethane; aromatic, such as benzene, toluene, xylene, monochlorobenzene and dichlorobenzene; aliphatic hydrocarbon, such as n-hexane, cyclohexane, and ligroin; and solvent containing fluoride, such as tetrafluoropropanol and pentafluoropropanol. These solvents can be employed alone or in combination thereof.

Preferred examples of casting solvents are alcohols and halogenated aliphatic hydrocarbons, and mixtures thereof.

The solvent amount is such to guarantee good filler dispersion. Preferred solvent amounts are from 30% to 99.9% w/w with respect to the filler.

Other substances can be added to the dispersion containing said filler based on aluminium hydroxide, as for example filler dispersants (as the product Rhodafac PA 17, supplied by Rhodia), or rheological modifiers (as for example short alkylic chains alcohol, as for example methanol, ethanol or iso-propanol), or other compounds, such as thickeners, pH controllers, lubricants, surfactants, antifoaming agents, waterproofing agents, dyes, plasticizers .

The processes to make the filler dispersion and to obtain the transparent polymer into a liquid state can be achieved by means of the typical techniques known in the Art, such as for example, high speed mixers or other systems.

The polymeric films of the present invention are particularly advantageous for reducing the manufacturing costs of displays and other electronic devices, due to their compatibility with continuous processes, also defined roll-to-roll, (ideal for the realization of optical and electronic devices on flexible substrates) and with conventional printing techniques, such as for example photolithography.

In a second aspect, the present invention refers to an optical device comprising a polymeric film comprising a) a transparent polymer and b) an inorganic filler based on aluminium hydroxide, as above described with respect to the first aspect of the present invention.

Optical devices of the present invention are, for example, thin-film solar cells, liquid crystal displays (LCD), organic light-emitting diode displays (OLED), electronic paper (e-paper), and other electronic devices, flexible printed circuit boards and high temperature capacitors.

These devices benefit from polymeric film substrates having low coefficient of thermal expansion, high transparency, low tendency to brittleness, and low manufacturing costs with obvious technical and economical advantages, particularly useful for the commercialisation of such devices.

Additional characteristics and advantages of the present invention will be more evident in the following description and examples. These examples must be intended as illustrative of the present invention without limiting it.

### Examples

FILM 1 (Reference) was obtained by polymerising 9,9'-bis(4-hydroxyphenyl) fluorene with the interfacial polycondensation technique as described in Patent EP 396,418, using a mixture of 50% therephtalic acid and 50% isopthalic acid. 10 grams of the so obtained Polymer 1 were dissolved in 90 grams of methylene chloride. The dope was then degassed for 20 minutes and cast on a glass substrate by a gravity die. After solvent drying, the film thickness was 100 µm. The film was thermally treated at 270°C for 20 minutes in order to remove the residual solvent and to eliminate the irreversible shrinkage.

FILM 2 (Invention). 3.08 grams of filler Disperal OS-1 (a superficially modified boehmite filler available from Sasol GmbH) were dispersed in 2 grams of Ethanol and 90 grams of methylene chloride by a high shear mixer for obtaining a suspension of said filler.

Then, 6.9 grams of Polymer 1 used to prepare the reference Film 1 were dissolved in this filler suspension.

In order to eliminate possible clumps, the so obtained dope was maintained under slow agitation for about 24 hours and then filtered by 10 µm medium under a pressure adjusted in order to achieve a satisfactory flow through the filter. Finally, the dope was degassed for 20 minutes and then cast on a glass substrate by a gravity die.

After solvent drying, the film thickness was 100 µm.

The film was thermally treated in an oven at 270°C for 20 minutes in order to remove the residual solvent and to eliminate the irreversible shrinkage.

FILM 3 (Invention). It was obtained by using the same method described above referring to Film 2, except that 3.08 grams of filler Disperal OS-2, a superficially modified boehmite filler available from Sasol GmbH, were dispersed in 92 grams of methylene chloride.

FILM 4 (Comparison). It was obtained by using the same method described above referring to Film 2, except that 0.63 grams of filler Aerosil R812S, a silica based filler available from Degussa AG, were dispersed in 90 grams of methylene chloride, and that subsequently 9.37 grams of Polymer 1 were dissolved in the so obtained filler suspension.

FILM 5 (Comparison). It was obtained by using the same method described above referring to Film 2, except that 2.67 grams of filler Aeroxide C-805, an alumina based filler available from Degussa AG, were dispersed in 92.33 grams of methylene chloride, and that subsequently 6 grams of Polymer 1 were dissolved in the so obtained filler suspension.

FILM 6 (Comparison). It was obtained by using the same method described above referring to Film 2, except that 0.4 grams of filler Aerosil R972, a silica based filler available from Degussa AG, were dispersed in 95.6 grams of methylene chloride, and that subsequently 4 grams of Polymer 1 were dissolved in the so obtained filler suspension.

FILM 7 (Comparison). It was obtained by using the same method described above referring to Film 5, except that the filler Aeroxide P25, a titanium dioxide based filler available from Degussa AG, was used instead of the filler Aeroxide C-805.

### Films characterization.

The films 1 to 7 were evaluated for their thermal, optical and mechanical properties.

The coefficient of thermal expansion (CTE) was evaluated by means of a computer-controlled Instron 5564 dynamometer equipped with devices designed for tensile tests with a 500N load cell, tensile test clamps and thermal cells for testing up to 250°C. The CTE was evaluated by monitoring the length of a sample kept under constant stress during a temperature ramp.

The Optical transparency of the samples was obtained by measuring their transmittance by a Lambda 5 Spectrometer at a wavelength of 550 nm.

The haze was measured by an EEL M57 HAZEMETER.

The brittleness of the samples was measured by means of a test done by folding the films at progressively smaller curvature radii and assigning scholastic scores from 1 (very brittle) to 10 (very resistant). The smaller the folding radius, the better the score assigned.

Results are reported in Table 1.

**Table 1**

| Samples | Transmittance % (550 nm) | Haze (units) | Thermal expansion (ppm/°C) | Brittleness (score) |
|---|---|---|---|---|
| FILM 1 (Reference) | 90 | 1.1 | 64 | 10 |
| FILM 2 (Invention) | 87 | 2 | 30 | 8 |
| FILM 3 (Invention) | 84 | 2.7 | 36 | 8 |
| FILM 4 (Comparison) | 15 | 88.7 | 54 | 8 |
| FILM 5 (Comparison) | 40 | 53.4 | 45 | 4 |
| FILM 6 (Comparison) | 63 | 43.2 | 63 | 8 |
| FILM 7 (Comparison) | Not transparent | 100 | 49 | 4 |

Table 1 shows that the Films 2 and 3 of the present invention, comprising a filler based on aluminium hydroxide and a transparent polymer, showed a reduced coefficient of thermal expansion, lower than 40 ppm/°C, still retaining an optimal transparency, an optimal resistance to brittleness and a low haze.

On the contrary, reference Film 1 (same polymer but without fillers) and comparison Films 4 to 7 (same polymer, but with different filler types), showed unacceptable CTE (in the case of Film 1) and transparency and unacceptable haze for their application in optical devices (in the case of Films 4 to 7).

## Claims

1. A transparent polymeric film comprising a) a transparent polymer having a light transmittance of at least 80% at the wavelength of 550nm measured by a Lambda 5 spectrometer and b) an inorganic filler based on aluminium hydroxide, wherein said transparent polymer is represented by the general Formula I: 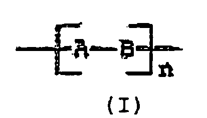
wherein A represents one or more different derivatives of 9,9'-bis(4-hydroxyphenyl)fluorene having general Formula II: 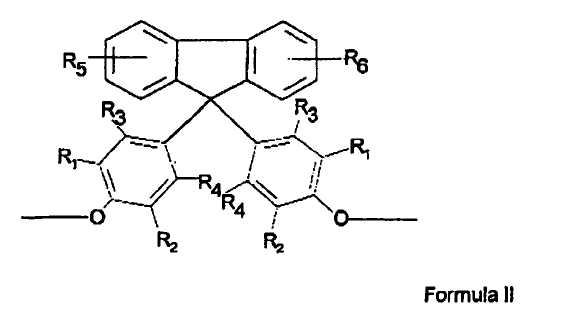
wherein R₁, R₂, R₃, R₄, R₅ and R₆ independently represents a hydrogen atom, a halogen atom, an alkyl group, an aryl group, an aralkyl group, an alkoxy group, and an acyl group;
B represents one ore more dicarboxy groups having Formula III: 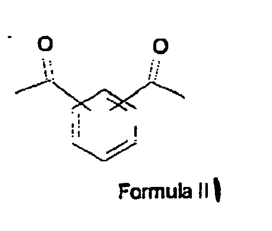
and n is the number of repeating units which build up the polymer and n is an integer higher than 20.

2. The transparent polymeric film according to Claim 1, wherein said film comprises one ore more polyesters represented by the following Formula IV: 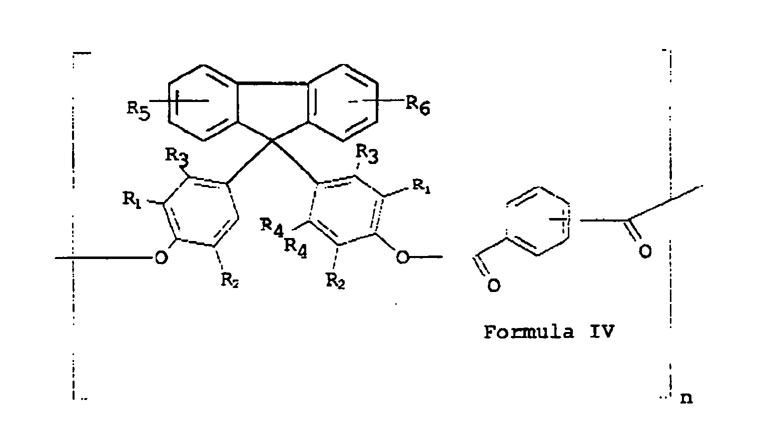 wherein n is an integer higher than 20.

3. The transparent polymeric film according to Claim 2, wherein said film comprises a polyester obtained from at least two different polymerisable units represented by a derivative of 9,9'-bis(4-hydroxyphenyl)fluorene of Formula II and by a mixture of isophthalic acid and terephthalic acid.

4. The transparent polymeric film according to Claim 3, wherein the mixture of isophthalic acid and terephthalic acid comprises from 20% to 80% in weight of isophthalic acid and from 80% to 20% in weight of terephthalic acid.

5. The transparent polymeric film according to Claim 3, wherein the mixture of isophthalic acid and terephthalic acid comprises from 30% to 70% in weight of isophthalic acid and from 70% to 30% of terephthalic acid.

6. The transparent polymeric film according to any one of the preceding claims, wherein said filler based on aluminium hydroxide is represented by the formula Al₂O₂•xH₂O, wherein x is in the range of from 1.0 to 3.0.

7. The transparent polymeric film according to Claim 6, wherein said filler based on aluminium hydroxide is boehmite or pseudo-boehmite.

8. The transparent polymeric film according to any one of the preceding claims, wherein the average particle diameter of the filler based on aluminium hydroxide is in the range from 10 to 200 nm.

9. The transparent polymeric film according to any one of the preceding claims, wherein the polymeric film thickness is in the range from 10 to 1000 µm.

10. An optical device comprising the transparent polymeric film according to any one of Claims from 1 to 9.

## Patentansprüche

1. Transparenter Polymerfilm, der a) ein transparentes Polymer mit einer Lichtdurchlässigkeit von mindestens 80% bei einer Wellenlänge von 550 nm bei Messung mittels eines Lambda-5-Spektrometers und b) einen anorganischen Füllstoff auf Basis von Aluminiumhydroxid umfasst, wobei das transparente Polymer durch die folgende allgemeine Formel I wiedergegeben wird: 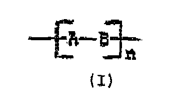
worin A für ein oder mehrere unterschiedliche Derivate von 9,9'-Bis(4-hydroxyphenyl)fluoren der allgemeinen Formel II steht: 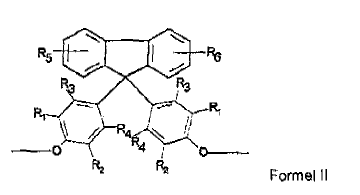
worin R₁, R₂, R₃, R₄, R₅ und R₆ unabhängig für ein Wasserstoffatom, ein Halogenatom, eine Alkylgruppe, eine Arylgruppe, eine Aralkylgruppe, eine Alkoxygruppe und eine Acylgruppe stehen;
B für eine oder mehrere Dicarboxygruppen der Formel III steht: 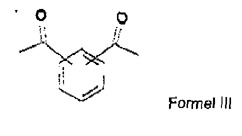
und n die Zahl der wiederkehrenden Einheiten ist, die das Polymer aufbauen, und n eine ganze Zahl größer als 20 ist.

2. Transparenter Polymerfilm nach Anspruch 1, wobei der Film einen oder mehrere Polyester der folgenden Formel IV umfasst: 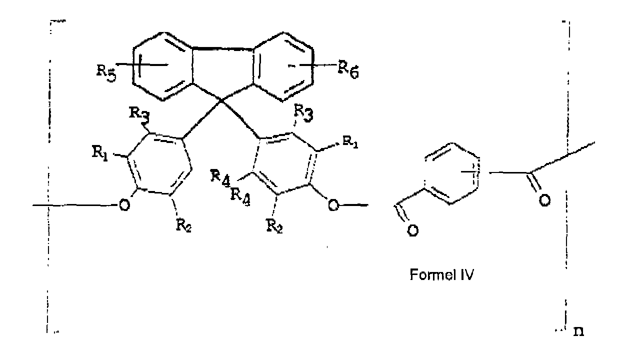 worin n für eine ganze Zahl größer als 20 steht.

3. Transparenter Polymerfilm nach Anspruch 2, wobei der Film einen Polyester umfasst, der aus mindestens zwei unterschiedlichen polymerisierbaren Einheiten erhalten wurde, die durch ein Derivat von 9,9'-Bis(4-hydroxyphenyl)fluoren der Formel II und durch ein Gemisch von Isophthalsäure und Terephthalsäure wiedergegeben sind.

4. Transparenter Polymerfilm nach Anspruch 3, wobei das Gemisch von Isophthalsäure und Terephthalsäure 20 bis 80 Gew.-% Isophthalsäure und 80 bis 20 Gew.-% Terephthalsäure umfasst.

5. Transparenter Polymerfilm nach Anspruch 3, wobei das Gemisch aus Isophthalsäure und Terephthalsäure 30 bis 70 Gew.-% Isophthalsäure und 70 bis 30 % Terephthalsäure umfasst.

6. Transparenter Polymerfilm nach einem der vorhergehenden Ansprüche, wobei der Füllstoff auf Basis von Aluminiumhydroxid durch die Formel Al₂O₃•xH₂O wiedergegeben wird, wobei x in einem Bereich von 1,0 bis 3,0 liegt.

7. Transparenter Polymerfilm nach Anspruch 6, wobei der Füllstoff auf Basis von Aluminiumhydroxid Boehmit oder Pseudo-boehmit ist.

8. Transparenter Polymerfilm nach einem der vorhergehenden Ansprüche, wobei der mittlere Teilchendurchmesser des Füllstoffs auf Basis von Aluminiumhydroxid in einem Bereich von 10 bis 200 nm liegt.

9. Transparenter Polymerfilm nach einem der vorhergehenden Ansprüche, wobei die Dicke des Polymerfilms in einem Bereich von 10 bis 1000 µm liegt.

10. Optische Vorrichtung, die den transparenten Polymerfilm nach einem der Ansprüche 1 bis 9 umfasst.

## Revendications

1. Film polymère transparent comprenant a) un polymère transparent ayant une transmittance de la lumière d'au moins 80 % à la longueur d'onde de 550 nm mesurée par un spectromètre Lambda 5 et b) une charge inorganique à base d'hydroxyde d'aluminium, dans lequel ledit polymère transparent est représenté par la formule générale I : 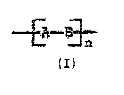
dans laquelle A représente un ou plusieurs dérivés différents de 9,9'-bis(4-hydroxyphényl)fluorène de formule générale II : 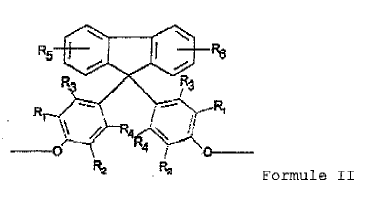
dans laquelle R₁, R₂, R₃, R₄, R₅ et R₆ représentent indépendamment un atome d'hydrogène, un atome d'halogène, un groupe alkyle, un groupe aryle, un groupe aralkyle, un groupe alcoxy et un groupe acyle ;
B représente un ou plusieurs groupes dicarboxy de formule III : 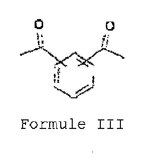
et n est le nombre de motifs répétés qui constituent le polymère et n est un entier supérieur à 20.

2. Film polymère transparent selon la revendication 1, dans lequel ledit film comprend un ou plusieurs polyesters représentés par la formule IV suivante : 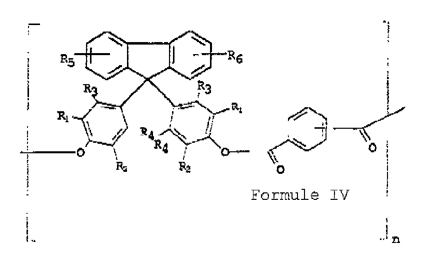 dans laquelle n est un entier supérieur à 20.

3. Film polymère transparent selon la revendication 2, dans lequel ledit film comprend un polyester obtenu à partir d'au moins deux motifs polymérisables différents représentés par un dérivé de 9,9'-bis(4-hydroxyphényl)fluorène de formule II et par un mélange d'acide isophtalique et d'acide téréphtalique.

4. Film polymère transparent selon la revendication 3, dans lequel le mélange d'acide isophtalique et d'acide téréphtalique comprend de 20 % à 80 % en poids d'acide isophtalique et de 80 % à 20 % en poids d'acide téréphtalique.

5. Film polymère transparent selon la revendication 3, dans lequel le mélange d'acide isophtalique et d'acide téréphtalique comprend de 30 % à 70 % en poids d'acide isophtalique et de 70 % à 30 % en poids d'acide téréphtalique.

6. Film polymère transparent selon l'une quelconque des revendications précédentes, dans lequel ladite charge à base d'hydroxyde d'aluminium est représentée par la formule Al₂O₃•xH₂O, dans laquelle x est compris entre 1,0 à 3,0.

7. Film polymère transparent selon la revendication 6, dans lequel ladite charge à base d'hydroxyde d'aluminium est la boehmite ou la pseudo-boehmite.

8. Film polymère transparent selon l'une quelconque des revendications précédentes, dans lequel le diamètre moyen de particule de la charge à base d'hydroxyde d'aluminium est compris entre 10 à 200 nm.

9. Film polymère transparent selon l'une quelconque des revendications précédentes, dans lequel l'épaisseur du film polymère est compris entre 10 à 1 000 µm.

10. Dispositif optique comprenant le film polymère transparent selon l'une quelconque des revendications 1 à 9.
